# EUROPEAN PATENT APPLICATION

(11) **EP 3 654 475 A1**
(43) Date of publication of application: **20.05.2020**
(21) Application number: 18461626.6
(22) Date of filing: 17.11.2018
(51) Int. Cl.: H02G 3/22

(54) **ELECTRICAL ASSEMBLY SEALING ARRANGEMENT**

(71) Applicant: Hamilton Sundstrand Corporation, Charlotte, NC 28217 (US)
(72) Inventor: Bielen, Micha, 56-500 Syców (PL); Cis, Marcin, Lutynia (PL)
(74) Representative: Dehns

(57) **Abstract**

An electrical assembly (2) comprises a wall (20) having an opening (18), one or more electrical leads (16) extending through the wall opening (18) and a grommet (30) arranged in the wall opening (18). The grommet (30) comprises a body (32) of resilient elastomeric material having at least one hole (34) extending axially therethrough for receiving a respective individual electrical lead (16). The grommet body (32) has a portion (36) with an external diameter D_{b} which, in an uncompressed state of the grommet (30) is greater than the internal diameter (Dₒₚ) of the wall opening (18) whereby when the grommet (30) inserted in the wall opening (18), the grommet body (32) is compressed into sealing and clamping engagement with the electrical lead (16).

## Description

### TECHNICAL FIELD

The present disclosure relates to a sealing arrangement, more particularly an electrical assembly sealing arrangement for sealing the leads of an electrical component relative to a housing.

### BACKGROUND

In a typical electrical assembly, electrical leads of one or more components mounted within a housing must be conducted out through an opening in a wall of the housing for connection to external circuitry or a power supply. An example of such an assembly is an LVDT (Linear Variable Differential Transducer). LVDTs are widely used to detect or measure the displacement of moving elements such as the spool in a servovalve or movable components of an actuator. The LVDT comprises a plurality of coils and magnetic core that is attached by a support to a moving element whose displacement is measured or detected. The coils are electrically connected to an external electronic by lead wires which exit the LVDT housing through an opening in the wall of the housing. The opening is a potential path for moisture and vapour to enter the housing which would be detrimental to the LVDT. Also, the leads need to be firmly secured at the exit to avoid pull out and thereby damage to the LVDT.

### SUMMARY

From a first aspect, the disclosure provides an electrical assembly comprising a wall having an opening, one or more electrical leads extending through the wall opening and a grommet arranged in the wall opening. The grommet comprises a body of resilient elastomeric material having at least one hole extending axially therethrough for receiving a respective individual electrical lead. The grommet body has a portion with an external diameter D_{b} which, in an uncompressed state of the grommet is greater than the internal diameter Dₒₚ of the wall opening whereby when the grommet inserted in the wall opening, the grommet body is compressed into sealing and clamping engagement with the electrical lead.

The grommet body portion may be barrel shaped.

The grommet body portion may comprise a first flange at a first end thereof and/or a second flange at an opposed second end thereof for locating the grommet in the wall opening.

A terminal end of the first flange may be bevelled.

The grommet may further comprise an outwardly flaring lip extending axially from the second flange.

A terminal end of the lip may be bevelled.

The assembly may further comprise a ring arranged radially inwardly of the lip.

The assembly may further comprise a support for the assembly, the support comprising a bore for receiving the lip. The lip may be clamped between the bore and the ring.

The wall may be a wall of a housing containing one or more electrical components to which the electrical leads are connected. The assembly may be a sensor, for example a LDVT sensor.

The disclosure also provides a grommet comprising a body of resilient elastomeric material having at least one hole extending axially therethrough for receiving an electrical lead, the grommet body having a barrel shaped portion for insertion into an opening of a smaller diameter than the largest diameter of the barrel shaped portion whereby when inserted in the opening, the grommet body is compressed into sealing and clamping engagement with the electrical lead.

The grommet may have the additional features as described above.

The disclosure also provides a method of sealing one or more electrical leads passing through an opening in a wall, comprising inserting the one or more leads through respective openings of a grommet in accordance with the disclosure and inserting the grommet into the wall opening so as to compress the barrel shaped portion thereof so as to compress the grommet body into sealing and clamping engagement with the leads.

The method may further comprise positioning a ring radially inwardly of a lip of the grommet, and inserting the lip and a ring arranged radially inwardly of the lip into a bore such that the lip is compressed between the bore and the ring.

### BRIEF DESCRIPTION OF DRAWINGS

An embodiment of the disclosure will now be described with reference to the accompanying drawings in which:
Figure 1 shows a Linear Variable Differential Transducer (LVDT);
Figure 2 shows an LVDT which incorporates the disclosure;
Figure 3 shows a grommet in accordance with the disclosure;
Figure 4 shows a cross section along line A-A of Figure 3;
Figure 5 shows a perspective view of the grommet of Figures 3 and 4;
Figure 6 shows a further perspective view of the grommet of Figures 3 and 4;
Figure 7 shows insertion of the grommet into a wall opening;
Figure 8 shows the grommet inserted into the wall opening; and
Figure 9 shows a detail of the LVDT of Figure 2 mounted to a support.

### DETAILED DESCRIPTION

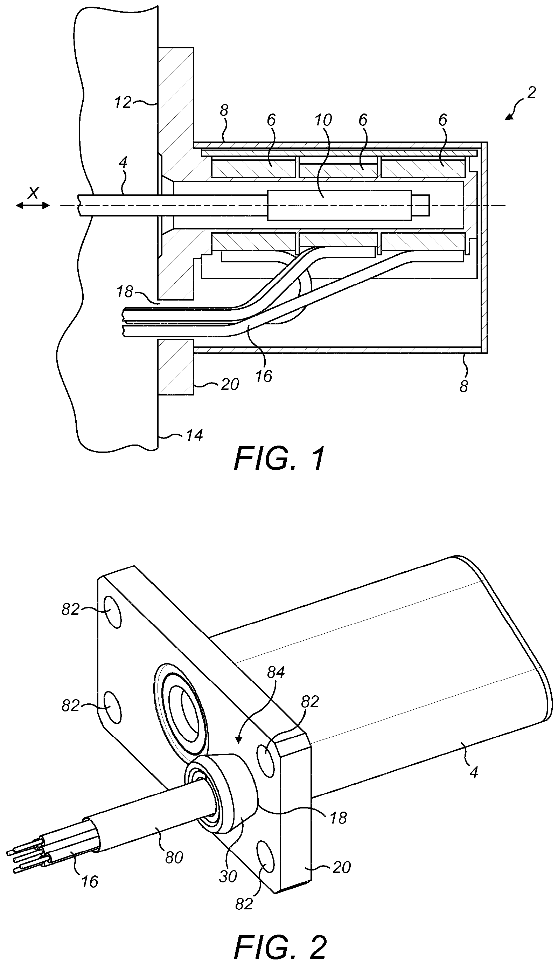

With reference to Figure 1, an electrical assembly 2 in the form of a Linear Variable Differential Transducer (LVDT) is illustrated. An LVDT 2 is typically used to detect or measure the displacement of a moving element 4 such as a spool in a servovalve. In general the LVDT 2 comprises a number of three coils 6 mounted in a housing 8 and a magnetic core 10 that is attached to the moving element 4 whose displacement is being measured or detected. The coils 6 are mounted in the housing 8 on a bobbin 12 which is attached to a further support 14. The coils 6 are electrically connected to an external electronic circuit by electrical leads 16. The leads 16 exit the LVDT housing 4 through an opening 18 in a wall 20 of the housing 8. The opening 20 is a potential path for moisture and vapour to enter the housing 8, which is undesirable as the LVDT as an electric component is sensitive to humidity. It is therefore necessary adequately to seal the opening 18.

To effect this seal, a grommet 30 is inserted in the opening 18.

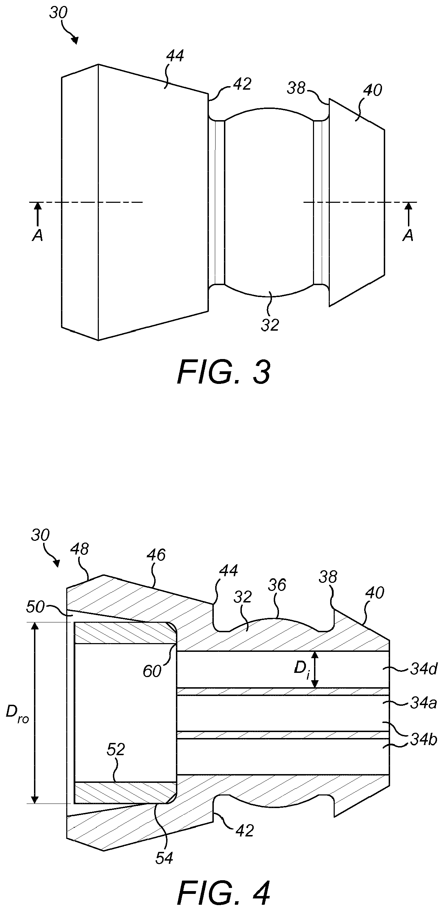

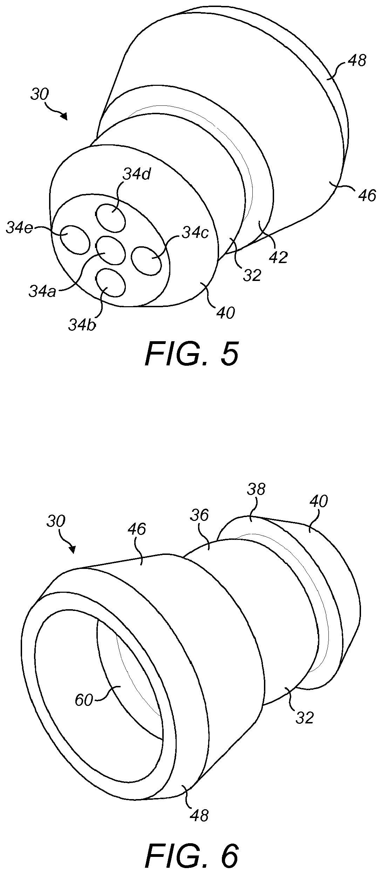

The grommet 30, which is best illustrated in Figures 3 to 9, comprises a body 32 which is made from a resilient elastomeric material, for example rubber. The grommet body 32 has at least one hole 34, in this case five holes 34a...34e, extending axially therethrough for receiving the electrical leads 16 of the LVDT 2. The number of holes 34 will be the same as the number of electrical leads 16. In this embodiment, there is a central hole 34a which extends along the central axis A of the grommet 30. The other holes 34b...34e may, as is illustrated in this embodiment, be symmetrically arranged around the central axis A, for example on the same radius and circumferentially equispaced from one another. Of course, other hole configurations are possible. Also, while the holes 34 are arranged parallel to the axis A, in other embodiments, they may be non-parallel, for example angled relative to the axis A.

The inner diameter Dᵢ of each hole 34 is close to the outer diameter Dₒ of the associated electrical lead 16. The hole inner diameter Dᵢ may, for example be just slightly larger than the lead outer diameter Dₒ, for example 1% larger, to facilitate insertion of the electrical leads 16 through the holes 34. For example, the leads 16 may be a sliding fit within the holes 34.

The grommet body 32 comprises a central body portion 36 which is flanked by a first flange 38 at one end 40 of the grommet body 32 and a second flange 42 arranged at an opposed second end 44 of the grommet body 32.

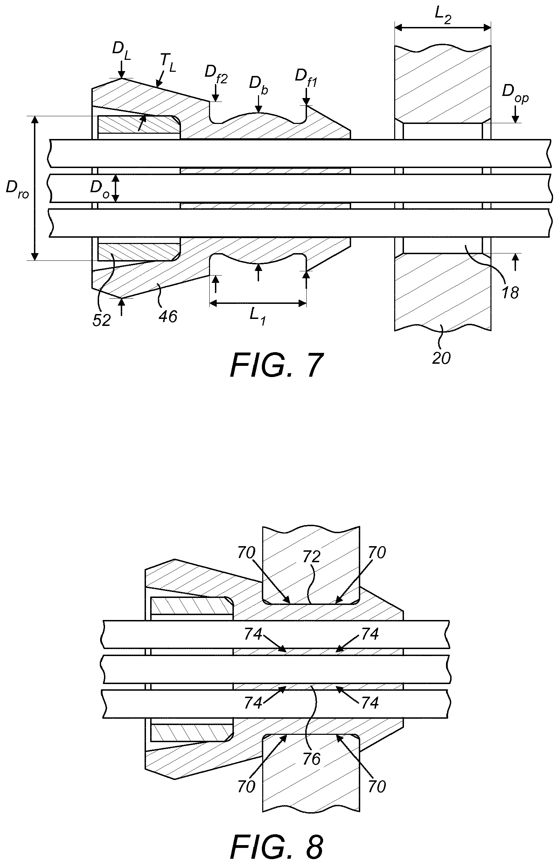

As can be seen from Figures 3 and 4 for example, the central body portion 32 is barrel shaped. By barrel shaped is meant that the diameter of the central body portion 36 increases towards its centre to a maximum diameter D_{b} illustrated in Figure 7. The central body portion 36 therefore has an axially convex outer surface. In this embodiment, the barrelling is smooth such that the central body portion 32 has a curved convex axial surface as shown. The convex axial surface may have a constant radius as shown, or have a variable radius.

In other embodiments, the convex shape may be provided by ramp surfaces, for example straight ramp surfaces extending inwardly from the first and second flanges 38, 42, forming conical surfaces which may meet at an apex or at an axially elongated enlarged diameter region. The convex shape of the central body portion 36 may facilitate insertion of the grommet 30 in the opening 18.

As can also be seen from Figure 7, the maximum diameter D_{b} of the central body portion 32 is greater than the inner diameter Dₒₚ of the wall opening 18. The significance of this will be discussed further below. The outer diameters D_{f1} and D_{f2} of the first and second flanges 38, 42 are also greater than the inner diameter Dop of the wall opening 18. The axial spacing L₁ between the first and second flanges 38, 42 may be slightly greater than the thickness L₂ of the housing wall 20, such that when the grommet 30 is inserted into the wall opening 18, the grommet 30 is located by the flanges 38, 42 engaging opposed sides of the wall 18. However, as the grommet 30 will be compressed radially during assembly, grommet will increase in length such that the initial axial spacing L₁ may in fact be the same as or even slightly less than the thickness L₂. This will assist for example in resisting pulling out of the grommet 30. As can be seen from Figure 4 for example, the first end 40 of the body portion 32 is bevelled and this may facilitate insertion of the grommet 30 into the wall opening 18.

As can be seen from Figure 4 for example, an outwardly flaring lip 46 extends from the second flange 42 at the second end 44 of the central body portion 32. By outwardly flaring is meant that the outer diameter of the lip 46 increases in a direction away from the second end 44 of the central body portion 32. The lip 46 may therefore, as shown, have a generally frusto-conical shape.

The wall thickness Tₗ of the lip 46 may, as shown, increase in a direction away from the second end 44 of the central body portion 32. A terminal end 48 of the lip 46 is bevelled as shown for reasons which will be described further below.

Arrangable radially within the space 50 defined within the lip 46 is an annular ring 52. The ring 52 may, as shown in Figure 4, be located in a seat 54 provided at the base of the lip 46. The ring 52 may be formed in one part or in multiple parts to facilitate its positioning around the leads 16 as will be described further below.

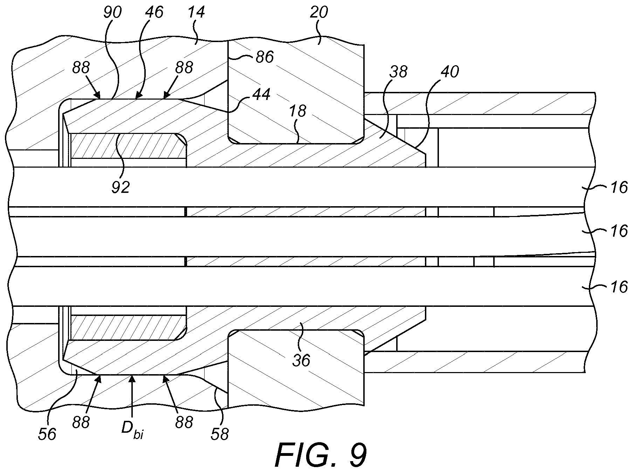

As can be seen from Figure 2, the lip 46 projects from the housing wall 20 and as can be seen from Figure 9, is received within a bore 56 formed within the support 14 to which the LVDT 2 is mounted. As can be seen from Figures 7 and 9, The maximum outer diameter Dₗ of the lip 46 is greater than the inner diameter D_{bi} of the bore 56. The entrance 58 to the bore 56, which with the bevelling of the terminal end 48 of the lip 46 facilitates insertion of the lip 46 into the bore 56

The lip wall thickness Tₗ is chosen, at least over a portion thereof, to be greater than the difference in the outer diameter Dᵣₒ of the ring 52 and the inner diameter D_{bi} of the bore 56 for reasons which will be explained further below.

Having described the components of the assembly above, the assembly of those components will now be described.

As a first step, the electrical leads 16 protruding through the wall 20 of the LVDT housing 8 will be inserted through the holes 34 in the grommet body 32 from the first end 40 of the grommet 30. As discussed above, the leads 16 may be a close or sliding fit within the holes 34.

The grommet 30 is then inserted through the wall opening 18. The bevelling of the first end 40 of the grommet body 32 facilitates the insertion of the grommet 30. The resilience of the grommet body material permits the grommet 30 to elastically deform during its insertion. The grommet 30 may be pushed into the opening 18 manually, for example using a tool (not shown) which engages within the lip 46 and abuts on a shoulder 60 at the base of the lip 48. The ring 52 or a separate tool may be used for this purpose.

The grommet 30 is pushed into the opening 18 until the first flange 38 passes through the opening 18 and resiles to its original configuration, so as to overlap a surrounding portion of the wall inner surface. This will assist in resisting pull out of the grommet 30 from the opening 18. At that point, the second flange 42 will be positioned adjacent the outer surface of the wall 20 and will prevent the grommet 30 being pushed too far into the opening 18.

It will be appreciated that since the diameter D_{b} of the central barrelled portion 36 of the grommet body 32 is larger than the internal diameter Dₒₚ of the opening 18, the central barrelled portion 36 will be deformed radially inwardly as Illustrated by arrows 70 in Figure 8 and will form a seal 72 with the internal diameter of the opening 18. Moreover, the grommet material will also deform around the individual leads 16 as Illustrated by arrows 74 in Figure 8 so as both to clamp the leads 16 in the holes 34, thereby assisting in preventing pull-out of the leads 16. and also forming a seal 76 around each individual lead 16. This provides both good sealing and retention of the leads 16.

As illustrated in Figure 2, the leads 16 protruding from the grommet 30 may be bundled together and held in a shrink wrap sleeve 80 or the like. This may further reduce the likelihood of any individual lead 16 being pulled out from the LVDT 2 as any load applied to the bundle will be spread between the plurality of leads 16.

As discussed above, the LVDT 2 is mounted to a support 14. For example, fasteners may extend through holes 82 in the wall 20 into the support 14. The support 14 may be a part of the equipment from which the movable element 4 protrudes.

The protruding part 84 of the grommet 30 (shown in Figure 2) is accommodated within the bore 56 of the support 14. If necessary, one or more shims (not shown may be arranged at the interface 86 between the support 14 and the wall 20 of the LVDT 2. This allows the axial position of the moving element 4 to be adjusted relative to the coils 6 of the LVDT 2 if necessary.

Before insertion of the protruding part 84 of the grommet 30 into the bore 56, the ring 52 is inserted radially inwardly of the grommet lip 46 onto its seat 60. As discussed above, the ring 52 may be formed in a plurality of axially extending parts to allow it more easily to be assembled around the leads 16. The grommet 30 is then pushed into the bore 56. Insertion of the grommet 30 is facilitated by the bevelled terminal end 48 of the lip 46 and the chamfering of the entrance 58 to the bore 56.

As the grommet 30 is inserted, the lip 46 is deformed radially inwardly into further engagement with the outer diameter of the ring 52. As the thickness of the lip 46 is greater than the difference between the ring outer diameter Dᵣₒ and the bore inner diameter D_{bi}, the lip 46 will be radially compressed between the bore 56 and the ring 52 (illustrated by arrows 88 in Figure 9) so as to form a seal at the external interface 90 between the lip 46 and the bore 56 and at the internal interface 92 between the lip 46 and the ring 52. This will provide a significant barrier for moisture trying to enter either the support 14 or the LVDT 2 through the interface 86 between the LDVT 2 and the support 14.

The ring 52 also allows for good sealing even in the event that there is some misalignment between the axes of the bore 56 and the wall opening 18, as the lip 46 will be able to deform to accommodate the misalignment.

It will be appreciated from the above description that the assembly and grommet 30 of the present disclosure in various embodiments provide significant advantages.

For example, the compression of the barrelled grommet portion 36 around the leads not only seals the leads 16 but also assists in resisting lead pull out.

In addition, the lip arrangement disclosed may also improve sealing between the adjacent support 14 and the LVDT 2.

The disclosed arrangement avoids the need for the use of sealants such a silicone which may be difficult to locate in wall openings and between multiple leads. Also, the clamping effect provides improved pull out resistance compared to known sealants.

It will be understood that the above description is of an exemplary embodiment only and that modifications may be made to the embodiments without departing from the scope of the disclosure. For example, while the disclosure has been described in terms of an LVDT, it may be applied more widely than that and will find application in any assembly where one or more leads 16 pass through a wall opening 18.

Also, while five leads 16 are illustrated in the embodiment, fewer or more leads 16 may be accommodated. Indeed the disclosure is applicable to just a single lead 16.

Also, while the grommet 30 is disclosed as having flanges 38, 42 at both ends thereof, a flange 38, 42 may be provided at just one end of the grommet 30. For example a flange 38 may be provided only at the first end 40 of the grommet 30 for resisting pull out of the grommet 30.

## Claims

1. An electrical assembly (2) comprising:
a wall (20) having an opening (18);
one or more electrical leads (16) extending through the wall opening (18); and
a grommet (30) arranged in the wall opening (18);
wherein the grommet (30) comprises a body (32) of resilient elastomeric material having at least one hole (34) extending axially therethrough for receiving a respective individual electrical lead (16), the grommet body (32) having a portion (36) with an external diameter (D_{b}) which, in an uncompressed state of the grommet (30) is greater than the internal diameter (Dₒₚ) of the wall opening (18) whereby when the grommet (30) inserted in the wall opening (18), the grommet body (32) is compressed into sealing and clamping engagement with the electrical lead (16).

2. An assembly as claimed in claim 1 wherein the grommet body portion (36) is barrel shaped.

3. An assembly as claimed in claim 1 or 2, wherein the grommet body portion (36) comprises a first flange (38) at a first end (40) thereof and/or a second flange (42) at an opposed second end (44) thereof for locating the grommet (30) in the wall opening (18).

4. An assembly as claimed in claim 3 wherein a terminal end of the first flange (38) is bevelled.

5. An assembly as claimed in claim 3 or 4, comprising an outwardly flaring lip (46) extending axially from the second flange (42).

6. An assembly as claimed in claim 5, wherein a terminal end (48) of the lip (46) is bevelled.

7. An assembly as claimed in claim 5 or 6, further comprising a ring (52) arranged radially inwardly of the lip (46).

8. An assembly as claimed in claim 7, further comprising a support (14) for the assembly, the support (14) comprising a bore (56) for receiving the lip (46), the lip (46) being clamped between the bore (56) and the ring (52).

9. An assembly as claimed in any preceding claim, wherein the wall (20) is a wall (20) of a housing (8) containing one or more electrical components (6) to which the electrical leads (16), are connected, the assembly optionally being a sensor, for example a LDVT sensor.

10. A grommet (30) comprising:
a body (32) of resilient elastomeric material having at least one hole (34) extending axially therethrough for receiving an electrical lead (16);
the grommet body (32) having a barrel shaped portion (36) for insertion into an opening (18) of a smaller diameter (Dₒₚ)than the largest diameter (D_{b}) of the barrel shaped portion (36) whereby when inserted in the opening (18), the grommet body (32) is compressed into sealing and clamping engagement with the electrical lead (16).

11. A grommet as claimed in claim 10, wherein the grommet body (32) comprises a first flange (38) at a first end (40) thereof and/or a second flange (42) at an opposed second end (44) thereof for locating the grommet (30) in the opening (18).

12. A grommet as claimed in claim 11 wherein a terminal end of the first flange (38) is bevelled.

13. A grommet as claimed in claim 11 or 12, comprising an outwardly flaring lip (46) extending from the second flange (38), a terminal end (48) of the lip (46) optionally being bevelled.

14. A method of sealing one or more electrical leads (16) passing through an opening (18) in a wall (20), comprising:
inserting the one or more leads (16) through respective openings (34) of a grommet (30) as claimed in any of claims 9 to 13; and
inserting the grommet (30) into the wall opening (18) so as to compress the barrel shaped portion (36) thereof so as to compress the grommet body (32) into sealing and clamping engagement with the leads (16).

15. A method as claimed in claim 14, wherein the grommet (30) is a grommet (30) as claimed in claim 13 and further comprising positioning a ring (52) radially inwardly of the lip (46), and inserting the lip (46) and ring (52) into a bore (56) such that the lip (46) is compressed between the bore (56) and the ring (52).
